Europäisches Patentamt

European Patent Office

Office européen des brevets

(19)

(11)   **EP 1 662 438 A1**

(12)

# EUROPEAN PATENT APPLICATION
published in accordance with Art. 158(3) EPC

(43) Date of publication:
**31.05.2006 Bulletin 2006/22**

(51) Int Cl.:
*G06T 1/00* (1995.01)

(21) Application number: **04772833.2**

(86) International application number:
**PCT/JP2004/012884**

(22) Date of filing: **30.08.2004**

(87) International publication number:
**WO 2005/022462 (10.03.2005 Gazette 2005/10)**

(84) Designated Contracting States:
**AT BE BG CH CY CZ DE DK EE ES FI FR GB GR HU IE IT LI LU MC NL PL PT RO SE SI SK TR**

(30) Priority: **01.09.2003 JP 2003308616**

(71) Applicant: **MATSUSHITA ELECTRIC INDUSTRIAL CO., LTD.**
**Kadoma-shi, Osaka 571-8501 (JP)**

(72) Inventors:
• **YAMADA, Shin**
  **c/o Matshushita Electric Industrial C**
  **Chuo-ku,Osaka-shi,Osaka 540-6319 (JP)**
• **MORITA, Kaoru,**
  **c/o Matsushita Electric Industrial**
  **Chuo-ku,Osaka-shi, Osaka 540-6319 (JP)**

• **NAGAO, Kenji,**
  **c/o Matsushita Electric Co., Ltd.**
  **Chuo-ku, Osaka-shi, Osaka 540-6319 (JP)**
• **YAMAOKA, Megumi,**
  **c/o Matsushita Electric Co. Ltd.**
  **Chuo-ku, Osaka-shi, Osaka 540-6319 (JP)**
• **HAYATA, Keisuke,**
  **c/o Matsushita Electric Co. Ltd.**
  **Chuo-ku, Osaka-shi, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54)    **ELECTRONIC DEVICE HAVING USER AUTHENTICATION FUNCTION**

(57)    It is an object of the present invention to provide an electronic apparatus in which authentication of a user is performed using information of a face image, and in which enrollment of an image for authentication and operation of the authentication can be performed while entertaining the user.

Face image data input through an image pickup portion (5) are compared with reference data in a non-volatile memory (4) so as to perform user authentication. An electronic apparatus (100) has a function of displaying an imitated character on a display portion (6). The electronic apparatus (100) also has an acquisition start determination function of determining whether a new face image of the user has to and can be photographed or not in order to improve the percentage of correct authentication. When it is concluded that the new face image has to and can be photographed, a character image is displayed on the display portion (6) so as to notify the user of whether to start acquiring reference data or not. Further, when a verification process is initiated, a character image is displayed on the display portion (6).

FIG. 1

| | |
|---|---|
| 1 | CONTROL PORTION |
| 4 | NON-VOLATILE MEMORY |
| | REFERENCE FACE IMAGE DATA |
| 5 | IMAGE PICKUP PORTION |
| 6 | DISPLAY PORTION |
| 7 | OPERATION PORTION |
| 20 | COMMUNICATION PORTION |
| 30 | VOICE PROCESSING PORTION |
| 31 | MICROPHONE |
| 32 | SPEAKER |

EP 1 662 438 A1

## Description

<Technical Field>

The present invention relates to an electronic apparatus with a user authentication function, that is, an electronic apparatus in which an authentication process is performed using a face image of a user.

<Background Art>

User authentication is carried out when restrictions are placed on use of an electronic apparatus such as a cellular phone or the like so as to prevent the electronic apparatus from being used by anyone other than a user of the electronic apparatus. Methods usingpasswords and methods usingbiometric information such as fingerprints, voiceprints, irises and so on indicating characteristics of human bodies are known as methods of user authentication.

A cellular phone to which a user authentication technique using a fingerprint is applied is disclosed in Patent Document 1. In addition, a technique using a face image as biometric information for authentication is disclosed in Patent Document 2.

However, when a fingerprint, a voiceprint, an iris or the like is used, considerably highly accurate means for inputting such information is required to thereby cause increase in cost. When a face image is used as biometric information, a camera as provided in a cellular phone can be used as an input means. However, in order to perform absolute user authentication using the face image, it is necessary to enroll a plurality of images for verification. That is, face images picked up for authentication differ from one another in accordance with their photographing locations, times, etc. It is therefore important to pick up face images in a plurality of conditions in advance. Enrollment of such a plurality of face images places a burden on a user, and it is also difficult to determine how many face images to enroll.

On the other hand, user authentication based on a password can be adopted with ease, but it is not fun for a user.

As for a technique for preventing unauthorized use while entertaining a user, a cellular phone in which a telephone function is suspended on condition that a pet breeding game comes into a predetermined state is disclosed in Patent Document 3. In this cellular phone, the lapse of a predetermined time is required till the pet breeding game comes into the predetermined state. There is a problem in security during the required lapse. Incidentally, as an electronic apparatus for making communications with virtual characters such as pets, ones disclosed in Patent Document 4 and Patent Document 5 in addition to that in Patent Document 3 have been proposed.

(Patent Document 1) Japanese Patent Laid-Open No. 2002-44727
(Patent Document 2) Japanese Patent Laid-Open No. 2002-261914
(Patent Document 3) Japanese Patent Laid-Open No. 2003-169132
(Patent Document 4) International Publication No. 00/53281 pamphlet
(Patent Document 5) Japanese Patent Laid-Open No. 2001-51970

The present invention was developed in consideration of the foregoing circumstances. It is an object of the present invention to provide an electronic apparatus in which authentication of a user is performed using information of a face image, and in which enrollment of an image for authentication and operation of the authentication can be performed while entertaining the user.

<Disclosure of the Invention>

An electronic apparatus according to the present invention is an electronic apparatus with a user authentication function having a function of authenticating a user and determining whether the user is a proper user or not, including image pickup means which can pick up a face image of the user, reference image storage means for storing reference data which are image data of a face of the proper user, authentication processing means for performing a user authentication process including an acquisition process for acquiring the aforementioned reference data and a verification process for verifying input image data picked up by the aforementioned image pickup means with the aforementioned reference data, acquisition start determining means for performing a necessity determination process for determining whether new reference data have to be acquired or not and a possibility determination process for determining whether a face image serving as a source of necessary reference data can be picked up or not, character imitating means for imitating a character, and display means which can display an image of the aforementioned character imitated by the aforementioned character imitating means, wherein the aforementioned authentication processing means displays a character image on the aforementioned display means and notifies the user of whether to start the aforementioned acquisition process or not when it is concluded in the aforementioned necessity determination process and the aforementioned possibility determination process that the aforementioned new reference data have to be acquired and the face image serving as a source of the aforementioned necessary reference data can be picked up. According to the present invention, the process for acquiring reference data of the user is performed while entertaining the user with communication with the character. In addition, when a criterion in the necessity determination process is set to conclude that the new reference data have to be acquired in the case where improvement in the percentage of correct verification can be expected, the percentage of correct verification canbe improved naturally without making the user do so on purpose. Accordingly, it is possible to reduce botheration of the user during the process for acquiring the reference data, that is, during the process for enrolling a face image.

In the electronic apparatus according to the present invention, the aforementioned authentication processing means includes a process for making a response to the user by displaying the aforementioned character image on the aforementioned display means during the aforementioned acquisition process and the aforementioned collimation process. According to the present invention, the user authentication process is performed while entertaining the user with communication with the virtual character. In addition, the reference data acquisition process can be also performed while entertaining the user with communication with the virtual character in the same manner. Accordingly, it is possible to reduce botheration of the user during authentication.

In the electronic apparatus according to the present invention, the aforementioned reference data include partial region image data of each face part or feature data of each face part, and the aforementioned verification process of the aforementioned authentication processing means includes calculation of similarity between image data of each face part extracted from the aforementioned input image data and the aforementioned reference data. According to the present invention, the verification process can be performed only by photographing the face with the image pickup means. Accordingly, verification can be performed without imposing a difficult operation on the user.

In the electronic apparatus according to the present invention, the aforementioned reference data are created out of a plurality of image data picked up in different photographing dates and hours or in different photographing locations. According to the present invention, the reference data are stored systematically in accordance with photographing conditions. Accordingly, it is possible to improve the accuracy of user authentication using a face image.

In the electronic apparatus according the present invention, the aforementioned acquisition process of the aforementioned authentication processing means includes a process for supporting picking up of face images of the proper user in predetermined photographing dates and hours or in predetermined photographing locations. According to the present invention, reference data for each photographing condition can be stored efficiently.

The electronic apparatus according to the present invention is characterized in that the aforementioned necessity determination process or the aforementioned possibility determination process is based on determination using information of a date and time or a photographing location. According to the present invention, face images of the proper user can be picked up in a plurality of photographing dates and hours and in a plurality of photographing locations. Accordingly, it is possible to improve the accuracy of user authentication.

According to the present invention, it is possible to provide an electronic apparatus in which authentication of a user is performed using face image information and in which enrollment of an authentication image and operation of the authentication can be performed while entertaining the user.

<Brief Description of the Drawings>

Fig. 1 is a diagram showing the schematic configuration of a camera-equipped cellular phone according to an embodiment of the present invention;

Fig. 2 is a diagram showing items of reference data in the camera-equipped cellular phone according to the embodiment of the present invention by way of example;

Fig. 3 is a diagram showing set classifications of photographing dates and hours and photographing locations of reference data in the camera-equipped cellular phone according to the embodiment of the present invention by way of example;

Fig. 4 is a schematic operation flow chart when an operation portion of the camera-equipped cellular phone according to the embodiment of the present invention is operated;

Fig. 5 is a schematic flow chart of a face image data verification process in the camera-equipped cellular phone according to the embodiment of the present invention;

Fig. 6 is a schematic flow chart of a reference data storage process in the camera-equipped cellular phone according to the embodiment of the present invention; and

Fig. 7 is a view showing a display example of a display portion when response is made in accordance with the operation of the operation portion in the camera-equipped cellular phone according to the embodiment of the present invention.

Incidentally, the reference numeral 1 in the drawings represents a control portion; 2, aROM; 3, aRAM; 4, anon-volatile memory; 5, an image pickup portion; 6, a display portion; 7, an operation portion; 10, an internal bus; 20, a communication portion; 21, an antenna; 30, a voice processing portion; 31, a microphone; 32, a speaker; and 100, a camera-equipped cellular phone.

<Best Mode for Carrying Out the Invention>

An embodiment of the present invention will be described below with reference to the drawings. In this embodiment, applicable electronic apparatus is a camera-equipped cellular phone. However, the applicable subject may be not limited to the camera-equipped cellular phone if it has an image pickup means.

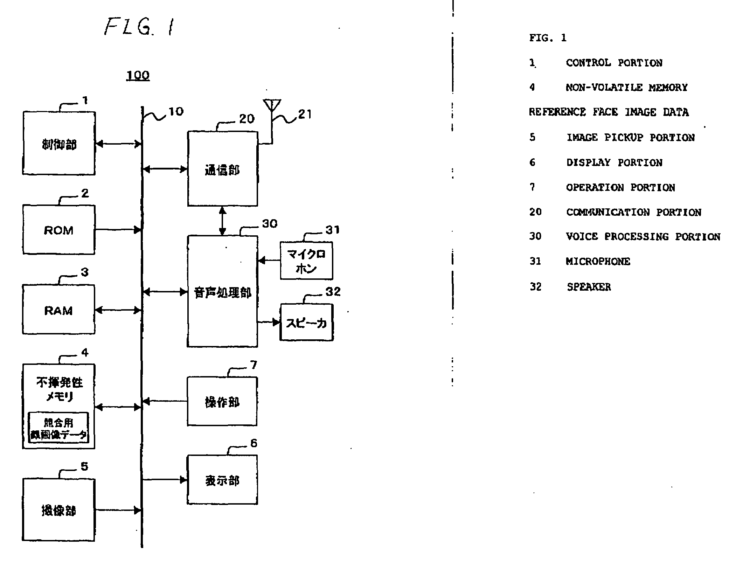

Fig. 1 is a diagram showing the schematic configuration of a camera-equipped cellular phone which is an electronic apparatus according to the embodiment of the present invention. A camera-equipped cellular phone 100 in Fig. 1 includes a control portion 1, a ROM 2, a RAM 3, a non-volatile memory 4, an image pickup portion 5, a display portion 6, an operation portion 7, an internal bus 10, a communication portion 20, an antenna 21, a voice processing portion 30, a microphone 31 and a speaker 32.

The control portion 1 controls the operation of the cellular phone 100 as a whole. The control portion 1 is chiefly constituted by a processor (not shown) for executing a predetermined program. The control portion 1 controls mutual transfer of data or commands among respective components of the cellular phone 100 through the internal bus 10. In addition, the control portion 1 has an authentication processing function using face image data of a user picked up by the image pickup portion 5 and face image data of a proper user stored in the non-volatile memory 4. Further, the control portion 1 has an acquisition start determination function for determining whether it is necessary and possible to pick up new face image data of the user or not. In addition, the control portion 1 has a function of imitating a virtual character. The function of imitating a virtual character can be attained in a method similar to that of a breeding game function. Therefore, detailed description of the function of imitating a virtual character will be omitted. When an image imitating a behavior of the character is output, the image is output through the display portion 6. When a voice imitating a behavior of the character is output, the voice is output through the voice processing portion 30 and the speaker 32.

The ROM 2 stores programs to be executed by the processor constituting the control portion 1 or various kinds of data to be used in the cellular phone 100. The RAM 3 is a memory for storing data temporarily. The RAM 3 is also used as a work memory when various processes are executed by the control portion 1. The non-volatile memory 4 is, for example, comprised of an EEPROM. The non-volatile memory 4 stores reference data which are face image data of a proper user which will be described later, image data when an image imitating a behavior of the character is output, and so on. The non-volatile memory 4 is also used for various data files when the user uses the camera-equipped cellular phone 100.

The image pickup portion 5 includes an optical system of lenses etc., image pickup devices, an image processing portion (not shown either), etc. The image pickup portion 5 outputs digital image data based on a photographed image signal. The image pickup portion 5 is similar to that which has been provided in a background-art camera-equipped cellular phone. The operation of the image pickup portion 5 in a normal photographing mode is also similar to that in the related-art camera-equipped cellular phone. That is, a through image in the photographing mode is displayed in the display portion 6. When a shutter button of the operation portion 7 is operated, digital image data based on a photographed image signal at that time is temporarily held in the RAM 3. When an instruction to save the data is given from the operation portion 7, the data are stored in the non-volatile memory 4. Incidentally, the camera-equipped cellular phone performing such a photographing operation has been known well. Therefore, detailed description thereof will be omitted.

The image pickup portion 5 serves to acquire the reference data stored in the non-volatile memory. In addition, the image pickup portion 5 also serves to acquire face image data to be used for authenticating the user of the cellular phone 100. When the image pickup portion 5 is used for such an authentication process, the user often operates the image pickup portion 5 while viewing a display screen of the display portion 6. It is therefore preferable that the lens of the image pickup portion 5 is trained to the display surface side of the display portion 6. This configuration can be attained as follows. That is, when a plurality of image pickup portions 5 are provided, one of the image pickup portions 5 is used for photographing the display surface side of the display portion 6. Alternatively, when the photographing direction of the image pickup portion 5 is made variable, the photographing direction is set on the display surface side of the display portion 6 during the authentication process.

The display portion 6 displays various kinds of information of the cellular phone 100. The display portion 6 is constituted by a liquid crystal display panel for making a display thereon, and a display control circuit for driving this liquid crystal display panel (not shown either).

The operation portion 7 serves to allow the user to input commands or data for operating the cellular phone 100. The operation portion 7 includes a ten-key pad for inputting phone numbers or various data, various function keys, etc. These keys have functions varying in accordance with operation modes. The keys also have a function as a shutter button or a zoom button in a normal photographing mode and a function as input keys for photographing an image or inputting various data in an authentication process which will be described later. In addition, the keys are also used for data input for making communication with a virtual character imitated by the control portion 1.

The communication portion 20 connected to the antenna 21 performs wireless communication with the outside. The communication portion 20 transmits transmission data on a carrier from the antenna 21, and decodes reception data received from the antenna 21. When the decoded data are voice data, the data are sent to the voice processing portion 30. When the decoded data are other data, the data are sent to the control portion 1, the RAM 3, the non-volatile memory 4 or the like through the internal bus 10 under the control of the control portion 1. On the other hand, the transmission data are input directly from the voice processing portion 30 or through the internal bus 10 from another component.

The voice processing portion 30 converts a voice signal input from the microphone 31, into digital data, and outputs the digital data to the communication portion 20 as transmission data. In addition, the voice processing portion 30 converts reception data (voice data) output from the communication portion 20, into an analog audio signal, and outputs the analog audio signal to the speaker 32. Further, the voice processing portion 30 can also send digital data based on an audio signal from the microphone 31, to the control portion 1 or the like through the internal bus 10, while converting digital data input through the internal bus 10, into an audio signal, and outputting the audio signal to the speaker 32.

Next, description will be made about the operation of the camera-equipped cellular phone 100 in Fig. 1. This cellular phone 100 has not only a function of making a call using voice but also a camera function using the image pickup portion 5 and a data communication function using the communication portion 20. These functions can be selectively activated by operating predetermined keys of the operation portion 7. Incidentally, the voice call function, the camera function and the data communication function are similar to those in the related art, and description thereof will be therefore omitted. In addition, the cellular phone 100 has a user authentication function, by which restrictions can be placed on use of anyone other than a proper user. The restrictions on use may be placed on all the functions of the cellular phone 100, or placed on only a part of the functions. Whether a user is a proper user or not is determined not only by comparison of a face image of the user with that of the proper user but also by input of a password.

Face image data of the proper user are used for authentication based on comparison of a face image of the user therewith. First, description will be made about reference data to be stored in the non-volatile memory 4. The proper user of the cellular phone 100 photographs at least one image of his/her own face by the image pickup means 5. Image data or feature data of the face image are stored in advance as the reference data.

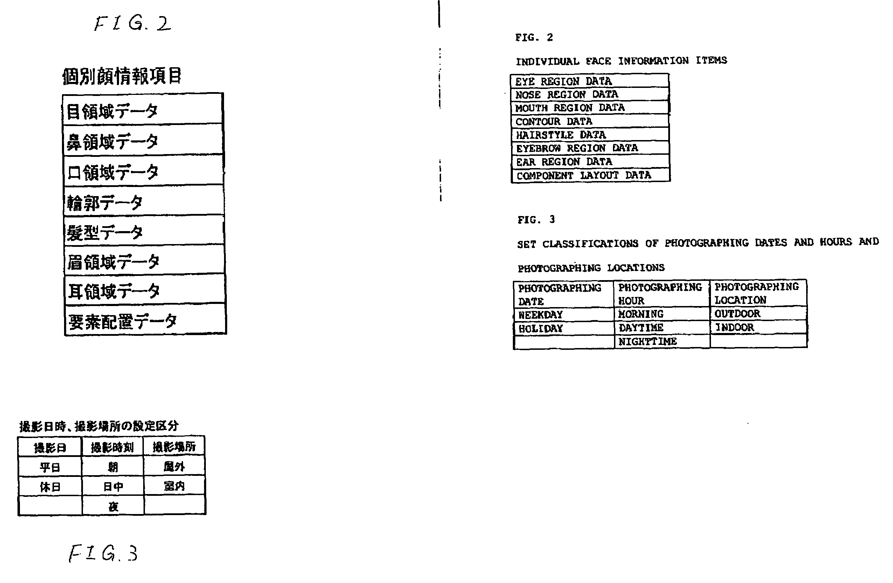

For example, the reference data include individual face information and average face information. The individual face information is data obtained by analyzing data of each photographed face image for each of items as shown in Fig. 2. For example, as for items such as eyes, a nose, a mouth, ears, eyebrows, etc., vertex coordinates of those items can be used as reference data. As for the contour, coordinates of a plurality of points on the contour line can be used as reference data. As for the hairstyle, data in which a hair region and the other region are distinguished by binary can be used as reference data. Further, as for component layout data, relative position data of representative components such as eyes, a nose, a mouth, etc. are stored as reference data. Incidentally, as for the items of eyes, a nose, a mouth, ears, eyebrows, etc., not their vertex coordinates but their reduced images may be used as reference data. For example, as for an eye, an image around the eye cut out to include the eye and then reduced may be used as reference data.

Individual reference data are compared with face image data photographed and acquired for authentication of a user. Thus, similarity is calculated. In order to determine whether the user is a proper user or not, it is preferable that a plurality of face images different in photographing date and hour or photographing location are stored in advance. Fig. 3 shows set classifications of photographing dates and hours and photographing locations by way of example. When one or plural pieces of face image data or feature data are stored for each combination of these classifications in advance, it can be expected to surely determine whether the user is a proper user or not, regardless of photographing conditions, user's face conditions, etc.

Incidentally, the authentication using face image data is preferably made available after a plurality of pieces of reference data of the proper user are stored for a plurality of classifications. However, the authentication may be made available after only one piece of reference data is stored. Alternatively, the face image authentication may be made effective after face images are taken for only predetermined kinds of combinations of set classifications of photographing dates and hours and photographing lodations. In this case, the user can enjoy photographing the face images for authentication itself as if it were a game.

The average face information is obtained as follows. That is, a plurality of pieces of face image data of the proper user are analyzed for each item shown in Fig. 2. The average of those data for each item is obtained from the plurality of face image data. Accordingly, the average face information indicates features of an average face image of the proper user.

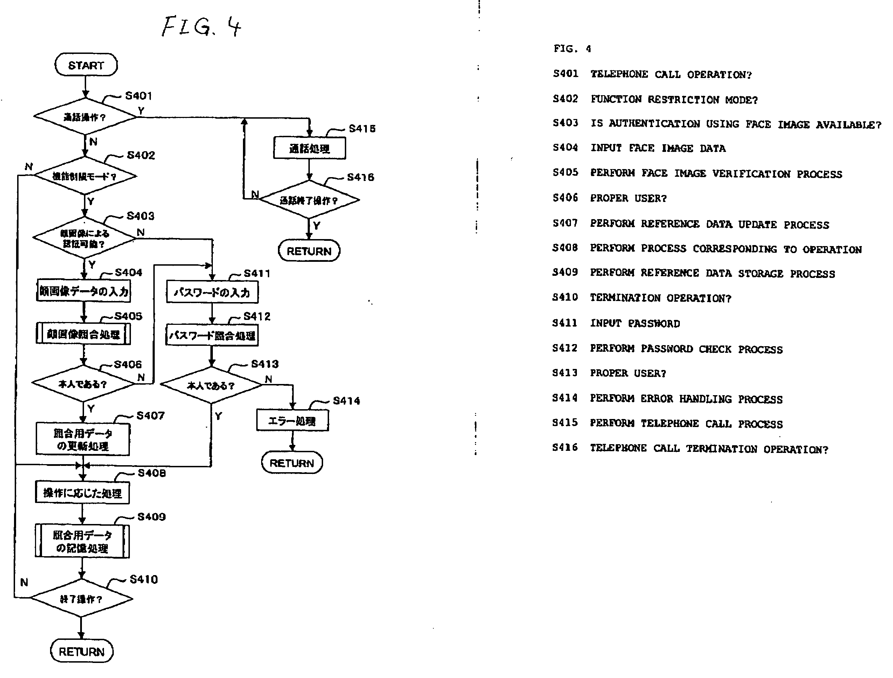

Subsequently, description will be made about the operation of the cellular phone 100 with reference to Figs. 4 to 6. Fig. 4 is a diagram showing a schematic operation flow when a user has operated the operation portion 7. Operation in Fig. 4 is controlled by the program of the control portion 1. Description will be made on the assumption that the cellular phone 100 has a function of placing restrictions on use of anyone other than the proper user as to all the functions but the telephone call function, and authentication for determining whether a user is a proper user or not is based on input of face image data of the user or input of a password.

When the operation portion 7 is operated, it is determined whether the operation is an operation involved in a telephone call process or not (Step S401). That is, it is determined whether the operation is an incoming call operation for receiving a call or not or whether the operation is an operation for sending a call or not. When it is concluded that the operation is not a telephone call operation, it is determined whether the cellular phone 100 has been set in a function restriction mode or not, that is, whether the cellular phone 100 has been set in a mode for placing restrictions on use of anyone other than the proper user or not (Step S402).

When the cellular phone 100 has been set in the function restriction mode, it is determined whether user authentication using a face image is available or not (Step S403). In this step, for example, it is determined whether reference data for a predetermined number of combinations of set classifications of photographing dates and hours and photographing locations shown in Fig. 3 have been stored in the non-volatile memory 4 or not. Incidentally, such determination is not always essential. If at least one piece of reference data has been stored in the non-volatile memory 4, user authentication may be made available.

When the user authentication using a face image is available, a face image of the user is taken and data of the taken face image are input in Step 404. For the face image to be taken, an image imitating the behavior of a virtual character may be displayed on the display portion 6 so as to indicate necessity to take an image for authentication, information about a method of photographing, and so on. In addition, voice information may be output from the speaker 32.

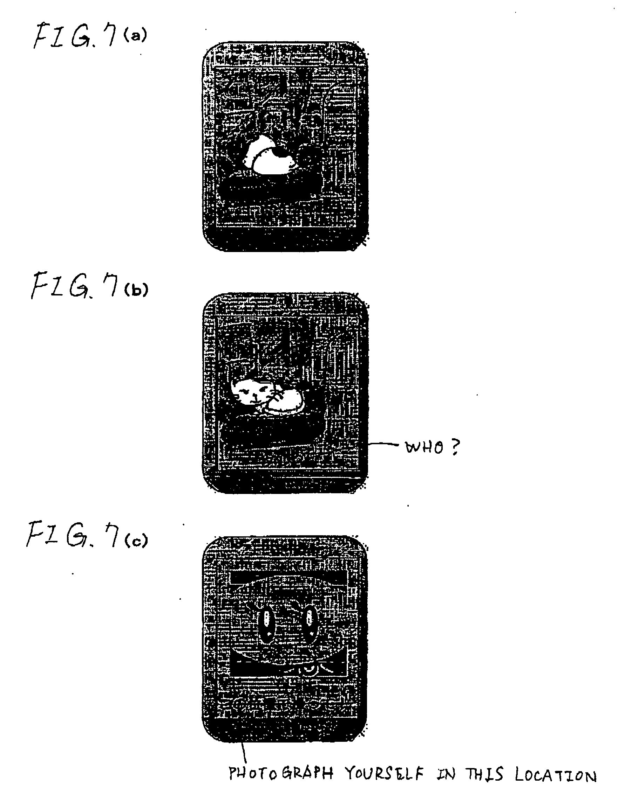

Fig. 7 shows an example of display in that case. In the example of Fig. 7, the character imitated by the control portion 1 is a cat. An image of the cat sleeping or playing freely as shown in Fig. 7 (a) is displayed till the operation portion 7 is operated. When an authentication process using a face image is required, the cat faces the front and asks a question or the like as shown in Fig. 7(b).

Then, the cat makes an inquiry such as "Only Mr. X (proper user's name) can use me. Are you Mr. X?" When the user operates a predetermined key (for example, "decision key") to give a response suggesting the user is Mr. X, the cat gives a response "I will confirm that. Please face on me." Thus, the cellular phone 100 moves to a face image photographing state using the image pickup portion 5. Upon the movement to the face image photographing state, a picture composition to be photographed may be displayed as shown in Fig. 7(c).

The user operates a shutter button to pick up a face image of the user. When image data are stored in the RAM 3, in Step S405, a verification process between the image data stored in the RAM 3 and the reference data stored in the non-volatile memory 4 is carried out. Thus, it is determined whether the photographed and input face image data are face image data of the proper user or not. Description will be made later about the verification process and the determination as to whether the use is the proper user or not.

When it is concluded that the input face image data are the face image of the proper user (Step S406), the cat makes a response such as "You are definitely Mr. X. You can use me." or the like, and the reference data stored in the non-volatile memory 4 are updated (Step S407).

This update process can be skipped, or it may be carried out only for face images photographed on dates and hours or locations which have not yet been stored.

Incidentally, the character imitated by the control portion 1 may be an imitation of an actual animate object such as a cat, an imitation of a virtual animate object, or an imitation of an inanimate object such as a robot. Such a technique for displaying an image imitating a character has been known well in various game machines. Therefore, description of the technique will be omitted. Messages from the character may be not only displayed through written words but also output by voice.

In Step S408, various processes can be performed in accordance with the operation portion 7 so that the user can make the cellular phone 100 carry out a desired process. The user can operate to set or release the function restriction mode. In addition, in this state, the cellular phone 100 performs a reference data storage process if necessary (Step S409) . Description will be made later about the storage process of Step S409.

Next, in Step S410, it is determined whether a termination operation of the cellular phone 100 is performed or not. When the termination operation is performed, the routine of processing is terminated. When the termination operation is not performed, the routine of processing returns to Step S408.

When it is concluded in Step S406 that the input face image data are not the face image of the proper user, a demand to input a password is displayed. For example, an instruction such as "Are you really Mr. X? Input a password if you are Mr. X." is displayed.

When the password is input (Step S411), a password check process is carried out (Step S412) so as to determine whether the user is the proper user or not. Incidentally, the password to be checked is set in advance and stored in the non-volatile memory 4.

When it is concluded that the user who input the password is the proper user as a result of password check (Step S406), a response such as "You are really Mr. X. You can use me." or the like is given, and the routine of processing moves to Step S408. On the contrary, when it is concluded that the user is not the proper user, an error handling process is carried out in Step S414. In this step, for example, a response such as "Your eyes are different. You are not Mr. X. You cannot use me." or the like is given, and the display screen moves to the display screen where the cat behaves freely.

When it is concluded in Step S402 that the cellular phone 100 is not set in the function restriction mode, the routine of processing moves to Step S408, waiting for operation on the operation portion 7. On the other hand, when it is concluded in Step S401 that the operation on the operation portion 7 is an operation involved in a telephone call process, the telephone call process is carried out (Step S415) till a call termination operation is detected in Step S416.

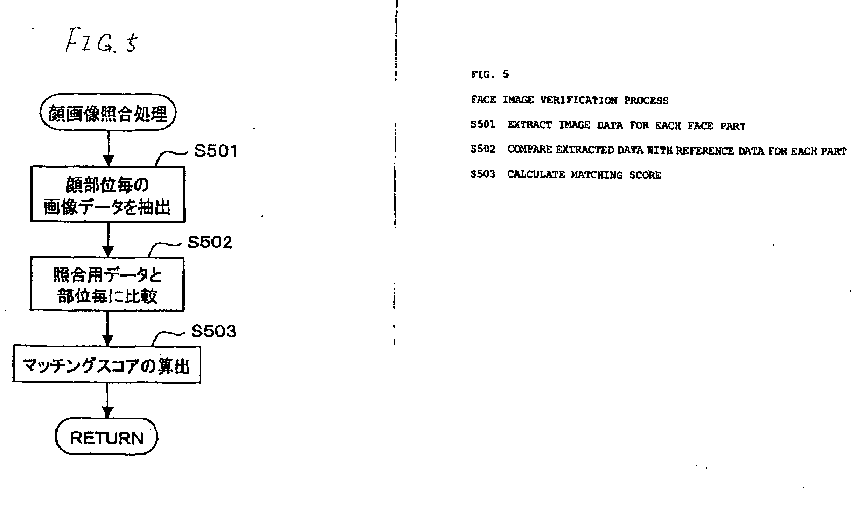

Next, the face image data verification process in Step S404 will be described with reference to the schematic flow chart of Fig. 5. In Step S501, image data of each part of the face are extracted from the face image data stored in the RAM 3. Items to extract are the items shown in Fig. 2. Then, the extracted data are compared with the reference data for each item so as to obtain similarity for each item (Step S502) . In Step 503, a matching score indicating likelihood that the user whose face image has been taken is the proper user is calculated based on the similarity for each item.

In the comparison with the reference data, the extracted data are compared with the individual face information of the reference data. Then, the number of items (the similarity is not smaller than a threshold) where the both substantially coincide with each other is obtained, and the number is regarded as a matching score. When the matching score based on similarity with any one piece of the individual face information is high, it is concluded that the user is the proper user.

When an enough high matching score cannot be obtained as a result of the comparison with the individual face information, the extracted data are compared with average face information including an average value of analyzing results for each item over a plurality of pieces of face image data of the proper user. Then, a weighted average of similarity for each item is regarded as a matching score. When the matching score is high, it is concluded that the user is the proper user, in the same manner as based on the individual face information. However, the condition that similarities for all the items are not lower than a predetermined value may be added.

Incidentally, the aforementioned criterion in the verification process is exemplary, but can be changed suitably in accordance with the required accuracy of authentication or the like. For example, the comparison with the average face information may be performed first. Alternatively, both the comparison with the individual face information and the comparison with the average face information may be performed to conclude that the user is the proper user when the matching scores obtained from the both are not lower than a predetermined value.

Alternatively, statistics of reference data may be used for comparison. For example, reference data are designed to include reduced images corresponding to face parts respectively. In this event, density values of pixels of each reduced image corresponding to each part of one face can be arranged to create an n-dimension column vector $\underline{x}$. P (provided $\underline{p}$ is smaller than $\underline{n}$) reduced images corresponding to one and the same part of the face are read from the non-volatile memory 4 so as to create vectors $x_f$ ($\underline{f}$ is a natural number not smaller than 1 and not larger than $\underline{p}$) comprised of density values in each pixel of the reduced images. A mean vector m of the $x_f$ is obtained, and eigenvectors If of a variance-covariance matrix $\Sigma$ of p vectors ($x_f$-m) are calculated. The eigenvectors of the matrix $\Sigma$ are vectors satisfying:

$$(\Sigma - \lambda_j I) l_j = 0$$

when $\lambda$ designates an eigenvalue and I designates a unit matrix. It is known that each eigenvector $l_j$ and each eigenvalue $\lambda_j$ can be calculated by use of Jacobi's method or the like. Further, a transposed matrix $A^t$ of a p-row p-column matrix A= ($l_1$, $l_2$, .... , $l_p$) in which the eigenvectors are arranged and a transposed matrix $X^t$ of an n-row p-column matrix X= ($x_1$-m, $x_2$-m, ...., $x_p$-m) in which displacements from the mean density value of the respective pixels in the reduced images of the reference data are arranged are created, and a p-row n-column matrix $A^t X^t$ is obtained by multiplying the two transposed matrices. Then, a matrix normalized to set 1 in the norm of each column in the $A^t X^t$ is regarded as a trans formation matrix B. Here, each column of the transformation matrix B means a main component direction of each column vector ($x_f$-m) ($\underline{f}$ is a natural number not smaller than 1 and not larger than p) constituting the aforementioned matrix x. Next, a vector $\underline{y}$ is created out of density values of respective pixels of a reduced image corresponding to each face part of the face image data stored in the RAM 3. A difference (y-m) between this vector $\underline{y}$ and the mean vector m of the vectors $x_f$ ($\underline{f}$ is a natural number not smaller than 1 and not larger than $\underline{p}$) belonging to the reference data of the same part is calculated. Then, this difference (y-m) is multiplied by the transformation matrix B from left, and further multiplied by a transposed matrix $B^t$ of the aforementioned transformation matrix from left. Thus, a vector $B^t B$ (y-m) is obtained. This corresponds to a process in which a vector (y-m) expressing one face part of the face image data stored in the RAM 3 is projected onto a space stretched by the column vectors ($x_f$-m) ($\underline{f}$ is a natural number not smaller than 1 and not larger than $\underline{p}$) constituting the aforementioned matrix X. Then, the norm of a vector ($B^t B$ (y-m) - (y-m)) is calculated. This norm is equal to the length of a perpendicular line in the projection. Accordingly, the norm can be used as similarity between the face part of the reference data and the face part of the face image data stored in the RAM 3.

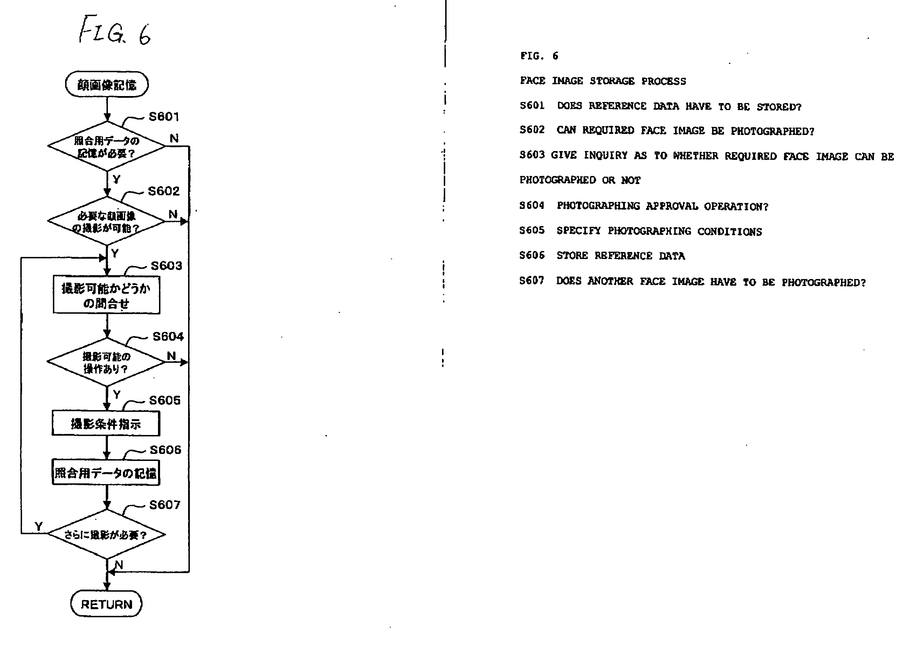

Subsequently, the reference data storage process in Step S409 will be described with reference to the schematic flow chart of Fig. 6. In Step S601, it is determined whether the reference data have to be stored or not. When it is concluded in Step S403 in Fig. 4 that authentication using a face image is not available, it is concluded that the reference data have to be stored. Although it is concluded that authentication using a face image is available, when reference data for combinations (see Fig. 3) of set classifications of photographing dates and hours and photographing locations are not stored sufficiently, it is concluded that the reference data have to be stored. Incidentally, when the percentage of correct authentications is low according to a recorded log of verification results, it may be concluded that the reference data have to be stored.

Next, in Step S602, it is determined whether a required face image can be photographed. For example, assume that a clackmeans (not shown) in the cellular phone 100 shows a weekday or anighttimewhileholidaydaytime reference data are required. In such a case, the required reference data cannot be acquired. Therefore, no image is photographed. Incidentally, in order that the decision that a face image can be photographed is given less frequently than necessary, it may be forcibly concluded that "the required face image cannot be photographed" when at least a predetermined time has not passed since an inquiry to the user as to whether the user can photograph the face image or not.

When the required face image can be photographed, an inquiry to the user is made in Step S603 as to whether the user can photograph the image or not. This inquiry is made by displaying an image imitating a behavior of the virtual character on the display portion 6. Since a process other than the telephone call process is in execution in step S409 in Fig. 4, it is easy and possible to make the virtual character to make a response to want to photograph the face image, in an interval between operations of the user.

Incidentally, the photographing date and hour and the photographing location shown in Fig. 3 are determined based on the clock means (not shown) or the like provided in the cellular phone 100. In addition, whether it is outdoor or indoor can be determined based on the illuminance detected by the image pickupmeans, the setting done by the user, or the like. Examples of the setting done by the user include a setting of white balance (electric bulb, fair weather, or cloudy weather) or an ON/OFF setting of flashlight. When determination is impossible or incorrect in the cellular phone 100, the determination is performed based on an inquiry in Step S603.

In Step S603, the virtual character gives an inquiry such as "I want to photograph your face now. Are you OK?" or "I want to photograph your face if you are outdoor now. Are you OK?"

When the operation of approval on photographing is detected (response of the approval onphotographing is performed through a decision key of the operation portion 7 or the like) in Step S604, the cellular phone 100 moves to a face image photographing state in Step S605. In this event, photographing guidance may be presented. For example, the presentation of the photographing guidance may be based on display similar to that in Step S404 (see Fig. 7(c)). Incidentally, a process for urging the user to input a password and determining whether the user is the proper user or not based on the password may be performed immediately before the cellular phone 100 moves to the face image photographing state.

When the user operates the shutter button to photograph a face image of the user, data of the face image are stored in the RAM 3 and analyzed for each item as shown in Fig. 2, and results of the analysis are stored in the non-volatile memory 4 (Step S606). Then, in Step S607, it is determined whether a plurality of face images have to be photographed or not. As long as a plurality of face images have to be photographed, the routine of processing returns to Step S603, repeating photographing.

Although the present invention has been described in detail and with reference to its specific embodiment, it is obvious for those skilled in the art that various changes or modifications can be made on the present invention without departing from the spirit and scope thereof.

This application is based on Japanese Patent Application No. 2003-308616 filed on September 1, 2003, and the contents thereof are incorporated herein by reference.

<Industrial Applicability>

The present invention is applicable to an electronic apparatus performing user authentication using face image information, or the like.

## Claims

**1.** An electronic apparatus with a user authentication function having a function of authenticating a user and determining whether the user is a proper user or not, comprising:

image pickup means which can pick up a face image of the user;
reference image storage means for storing reference data expressing a face of the proper user;
authentication processing means for performing a user authentication process including an acquisition process for acquiring the reference data and a verification process for verifying input image data picked up by the image pickup means with the reference data;
acquisition start determining means for performing a necessity determination process for determining whether new reference data have to be acquired or not and a possibility determination process for determining whether a face image serving as a source of necessary reference data can be picked up or not;
character imitating means for imitating a character; and
display means which can display an image of the character imitated by the character imitating means,
wherein the authentication processing means displays a character image on the display means and notifies the user of whether to start the acquisition process or not when it is concluded in the necessity determination process and the possibility determination process that the new reference data have to be acquired and the face image serving as a source of the necessary reference data can be picked up.

2. The electronic apparatus according to claim 1, wherein the authentication processing means includes a process for making a response to the user by displaying the character image on the display means during the acquisition process and the collimation process.

3. The electronic apparatus according to claim 1 or 2, wherein the reference data include partial region image data of each face part or feature data of each face part, and
wherein the verification process of the authentication processing means includes calculation of similarity between image data of each face part extracted from the input image data and the reference data.

4. The electronic apparatus according to any one of claims 1 to 3,
wherein the reference data are created out of a plurality of image data picked up in different photographing dates and hours or in different photographing locations.

5. The electronic apparatus according to claim 4, wherein the acquisition process of the authentication processing means includes a process for supporting picking up face images of the proper user in predetermined photographing dates and hours or in predetermined photographing locations.

6. The electronic apparatus according to any one of claims 1 to 5,
wherein the necessity determination process or the possibility determination process is based on determination using information of a date and time or a photographing location.

FIG. 1

| | |
|---|---|
| 1 | CONTROL PORTION |
| 4 | NON-VOLATILE MEMORY |
| | REFERENCE FACE IMAGE DATA |
| 5 | IMAGE PICKUP PORTION |
| 6 | DISPLAY PORTION |
| 7 | OPERATION PORTION |
| 20 | COMMUNICATION PORTION |
| 30 | VOICE PROCESSING PORTION |
| 31 | MICROPHONE |
| 32 | SPEAKER |

FIG. 1

FIG. 2

INDIVIDUAL FACE INFORMATION ITEMS

| |
|---|
| EYE REGION DATA |
| NOSE REGION DATA |
| MOUTH REGION DATA |
| CONTOUR DATA |
| HAIRSTYLE DATA |
| EYEBROW REGION DATA |
| EAR REGION DATA |
| COMPONENT LAYOUT DATA |

FIG. 3

SET CLASSIFICATIONS OF PHOTOGRAPHING DATES AND HOURS AND PHOTOGRAPHING LOCATIONS

| PHOTOGRAPHING DATE | PHOTOGRAPHING HOUR | PHOTOGRAPHING LOCATION |
|---|---|---|
| WEEKDAY | MORNING | OUTDOOR |
| HOLIDAY | DAYTIME | INDOOR |
| | NIGHTTIME | |

F I G. 2

個別顔情報項目

| |
|---|
| 目領域データ |
| 鼻領域データ |
| 口領域データ |
| 輪郭データ |
| 髪型データ |
| 眉領域データ |
| 耳領域データ |
| 要素配置データ |

撮影日時, 撮影場所の設定区分

| 撮影日 | 撮影時刻 | 撮影場所 |
|---|---|---|
| 平日 | 朝 | 屋外 |
| 休日 | 日中 | 室内 |
| | 夜 | |

F I G. 3

# FIG. 4

EP 1 662 438 A1

FIG. 4

S401 TELEPHONE CALL OPERATION?

S402 FUNCTION RESTRICTION MODE?

S403 IS AUTHENTICATION USING FACE IMAGE AVAILABLE?

S404 INPUT FACE IMAGE DATA

S405 PERFORM FACE IMAGE VERIFICATION PROCESS

S406 PROPER USER?

S407 PERFORM REFERENCE DATA UPDATE PROCESS

S408 PERFORM PROCESS CORRESPONDING TO OPERATION

S409 PERFORM REFERENCE DATA STORAGE PROCESS

S410 TERMINATION OPERATION?

S411 INPUT PASSWORD

S412 PERFORM PASSWORD CHECK PROCESS

S413 PROPER USER?

S414 PERFORM ERROR HANDLING PROCESS

S415 PERFORM TELEPHONE CALL PROCESS

S416 TELEPHONE CALL TERMINATION OPERATION?

# FIG. 5

```
   ┌─────────────┐
   │  顔画像照合処理  │
   └─────────────┘
          │
          ▼           ～ S501
   ┌─────────────┐
   │   顔部位毎の   │
   │ 画像データを抽出 │
   └─────────────┘
          │
          ▼           ～ S502
   ┌─────────────┐
   │  照合用データと  │
   │  部位毎に比較   │
   └─────────────┘
          │
          ▼           ～ S503
   ┌─────────────┐
   │ マッチングスコアの算出 │
   └─────────────┘
          │
          ▼
   ┌─────────────┐
   │   RETURN    │
   └─────────────┘
```

FIG. 5

FACE IMAGE VERIFICATION PROCESS

S501  EXTRACT IMAGE DATA FOR EACH FACE PART

S502  COMPARE EXTRACTED DATA WITH REFERENCE DATA FOR EACH PART

S503  CALCULATE MATCHING SCORE

EP 1 662 438 A1

## FIG. 6

FIG. 6

FACE IMAGE STORAGE PROCESS

S601 DOES REFERENCE DATA HAVE TO BE STORED?

S602 CAN REQUIRED FACE IMAGE BE PHOTOGRAPHED?

S603 GIVE INQUIRY AS TO WHETHER REQUIRED FACE IMAGE CAN BE PHOTOGRAPHED OR NOT

S604 PHOTOGRAPHING APPROVAL OPERATION?

S605 SPECIFY PHOTOGRAPHING CONDITIONS

S606 STORE REFERENCE DATA

S607 DOES ANOTHER FACE IMAGE HAVE TO BE PHOTOGRAPHED?

FIG. 7 (a)

FIG. 7 (b)

— WHO ?

FIG. 7 (c)

PHOTOGRAPH YOURSELF IN THIS LOCATION

## INTERNATIONAL SEARCH REPORT

| International application No. |
|---|
| PCT/JP2004/012884 |

**A. CLASSIFICATION OF SUBJECT MATTER**
    Int.Cl⁷  G06T1/00

According to International Patent Classification (IPC) or to both national classification and IPC

**B. FIELDS SEARCHED**

Minimum documentation searched (classification system followed by classification symbols)
    Int.Cl⁷  G06T1/00, G06T7/00

Documentation searched other than minimum documentation to the extent that such documents are included in the fields searched

Electronic data base consulted during the international search (name of data base and, where practicable, search terms used)
    JSTPLUS(JOIS)

**C. DOCUMENTS CONSIDERED TO BE RELEVANT**

| Category* | Citation of document, with indication, where appropriate, of the relevant passages | Relevant to claim No. |
|---|---|---|
| A | JP 11-073092 A  (Omron Corp.), 16 March, 1999 (16.03.99), Par. Nos. [0039] to [0045]; Fig. 7 (Family: none) | 1-6 |
| A | JP 2003-058888 A  (Secom Co., Ltd.), 28 February, 2003 (28.02.03), Par. No. [0017]; all drawings (Family: none) | 1-6 |
| A | JP 2002-261914 A  (Hitachi, Ltd.), 13 September, 2002 (13.09.02), Full text; all drawings (Family: none) | 1-6 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 September, 2004 (28.09.04) | 12 October, 2004 (12.10.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/012884

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2003-169132 A (Yamaha Corp.), 13 June, 2003 (13.06.03), Full text; all drawings (Family: none) | 1-6 |

Form PCT/ISA/210 (continuation of second sheet) (January 2004)